(19) Europäisches Patentamt
European Patent Office
Office européen des brevets

(11) **EP 3 649 442 B1**

(12) **EUROPÄISCHE PATENTSCHRIFT**

(45) Veröffentlichungstag und Bekanntmachung des Hinweises auf die Patenterteilung:
**26.01.2022 Patentblatt 2022/04**

(21) Anmeldenummer: **18732755.6**

(22) Anmeldetag: **19.06.2018**

(51) Internationale Patentklassifikation (IPC):
**G01F 1/74** *(2006.01)*    **G01F 1/84** *(2006.01)*

(52) Gemeinsame Patentklassifikation (CPC):
**G01F 1/84; G01F 1/74**

(86) Internationale Anmeldenummer:
**PCT/EP2018/066273**

(87) Internationale Veröffentlichungsnummer:
**WO 2019/007679 (10.01.2019 Gazette 2019/02)**

(54) **MESSAUFNEHMER ZUM BESTIMMEN DES MASSENDURCHFLUSSES EINER FLÜSSIGKEIT**

MEASURING TRANSDUCER TO DETERMINE THE MASS FLOW OF A LIQUID

TRANSDUCTEUR DE MESURE POUR DÉTERMINER LE DÉBIT MASSIQUE D'UN LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2017 DE 102017115251**

(43) Veröffentlichungstag der Anmeldung:
**13.05.2020 Patentblatt 2020/20**

(73) Patentinhaber: **Endress+Hauser Flowtec AG**
**4153 Reinach (CH)**

(72) Erfinder:
• **ZHU, Hao**
**85354 Freising (DE)**
• **SCHERRER, Rémy**
**68960 Oberdorf (FR)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
EP-A1- 0 698 783    EP-A2- 0 791 807
WO-A1-01/04716    WO-A1-2007/022118
WO-A2-2007/035376    DE-A1-102010 006 429
US-A1- 2005 274 200

**Beschreibung**

Die vorliegende Erfindung betrifft einen Messaufnehmer zum Bestimmen des Massedurchflusses einer Flüssigkeit, umfassend: mindestens ein Messrohr zum Führen der Flüssigkeit wobei das Messrohr einen einlassseitigen Endabschnitt und einen auslassseitigen Endabschnitt aufweist; mindestens einen Trägerkörper, an dem das Messrohr im Bereich des einlassseitigen Endabschnitts und im Bereich des auslassseitigen Endabschnitts befestigt ist; mindestens einen Erreger zum Anregen von Schwingungen des Messrohrs in mindestens einer Schwingungsmode; mindestens einen Schwingungssensor zum Erfassen von Schwingungen des Messrohrs und zum Ausgeben von schwingungsabhängigen Signalen; eine Betriebs- und Auswerteschaltung zum Treiben des mindestens einen Erregers, zum Empfangen der schwingungsabhängigen Signale des Schwingungssensors, und zum Ermitteln eines den Massedurchfluss repräsentierenden Messwerts in Abhängigkeit von zumindest den schwingungsabhängigen Signalen des Sensors.

Ein gattungsgemäßer Messaufnehmer und dessen Betriebsverfahren ist beispielsweise in der Offenlegungsschrift DE 10 2010 003 948 A1 sowie in WO 2007/035376 A2 beschrieben.

Die Verarbeitung der schwingungsabhängigen Signale, die beispielsweise für Auswertungen, für Steuerungsanwendungen, für die visuelle Darstellung, für Dokumentationszwecke, etc., erfolgt, wird zunehmend digital durchgeführt. Dabei werden die veränderlichen schwingungsabhängigen Signale zunächst analog aufgenommen. In bekannter Weise können solche analoge Signale durch Abtasten mit einer hohen Abtastfrequenz abgetastet werden und in ein zeitdiskretes, eindimensionales Messsignal, das eine Folge von zeitlich aufeinander folgenden Messwerten aufweist, umgewandelt werden. Das dadurch erhaltene Messsignal weist jedoch ein Rauschen auf, welches durch veränderliche Eigenschaften der im Messrohr strömenden Flüssigkeit, beispielsweise durch den Grad einer Gasbeladung, unterschiedlich stark ausgeprägt sein kann. Es ist bekannt, das Messsignal mittels eines Tiefpasses zu filtern, was jedoch mit einer Reduktion der Datenrate einhergeht. Die Reduktion der Datenrate ist insbesondere bei zeitkritischen Anwendungen problematisch, wenn eine übergeordnete Einheit, beispielsweise eine Prozesssteuerungs- bzw. Prozessüberwachungseinheit, möglichst zeitnah über auftretende Änderungen des Massedurchflusses informiert werden muss.

Es ist bekannt, das Rauschen mit adaptiven Filtern zu unterdrücken, jedoch werden diese Filter in Abhängigkeit vom Rauschen der Messgröße gesteuert. Dies kann jedoch eine verzögerte Anpassung des Filters an veränderte Messbedingungen zur Folge haben, insbesondere dann, wenn sich Medieneigenschaften wie eine Gasbeladung einer Flüssigkeit sich plötzlich ändern.

Es ist daher die Aufgabe der vorliegenden Erfindung, hier Abhilfe zu schaffen.

Die Aufgabe wird erfindungsgemäß gelöst durch das Durchflussmessgerät gemäß dem unabhängigen Patentanspruch 1.

Der erfindungsgemäße Messaufnehmer zum Bestimmen des Massedurchflusses einer Flüssigkeit umfasst:

mindestens ein Messrohr zum Führen der Flüssigkeit wobei das Messrohr einen einlassseitigen Endabschnitt und einen auslassseitigen Endabschnitt aufweist;

mindestens einen Trägerkörper, an dem das Messrohr im Bereich des einlassseitigen Endabschnitts und im Bereich des auslassseitigen Endabschnitts befestigt ist;

mindestens einen Erreger zum Anregen von Schwingungen des Messrohrs in mindestens einer Schwingungsmode;

mindestens zwei Schwingungssensoren zum Erfassen von Schwingungen des Messrohrs und zum Ausgeben von schwingungsabhängigen Signalen;

eine Betriebs- und Auswerteschaltung zum Treiben des mindestens einen Erregers, zum Empfangen der schwingungsabhängigen Signale der Schwingungssensoren, und zum Ermitteln einer Folge von einen jeweiligen Massedurchfluss repräsentierenden Messwerten in Abhängigkeit von zumindest einer Folge von jeweils eine Phasendifferenz zwischen den schwingungsabhängigen Signalen der Schwingungssensoren präsentierenden, zeitdiskreten Messsignalen, und

wobei die Betriebs- und Auswerteschaltung einen adaptiven Tiefpassfilter umfasst zum Filtern der Folge der den Massedurchfluss repräsentierenden Messwerte; wobei der Tiefpassfilter mindestens einen Filterparameter aufweist, der von mindestens einer adaptiven Steuergröße abhängt, die ihrerseits von der Gasbeladung des Messmediums abhängig ist.

In einer Weiterbildung der Erfindung ist die Steuergröße unabhängig vom den Massedurchfluss.

In einer Weiterbildung der Erfindung hängt die Steuergröße von einem Signal ab, welches das Ausmaß der Gasbeladung repräsentiert.

Erfindungsgemäß ist die Betriebs- und Auswerteschaltung dazu eingerichtet, die Steuergröße in Abhängigkeit einer gasbeladungsabhängigen Fluktuation einer Eigenfrequenz der Messrohrschwingung zu ermitteln.

In einer Weiterbildung der Erfindung umfasst der Tiefpassfilter einen adaptiven Filter, wobei die Steuergröße eine Gewichtungsfunktion aufweist, mit welcher ein aktueller, vorläufiger Messwert zu einem auszugebenden Messwert beiträgt, wobei die Gewichtungsfunktion von einer aktuellen Gewichtungszeitkonstanten abhängt, die in Abhängigkeit von der Gasbeladung ermittelt wird, wobei die Gewichtungsfunktion $k_m(\tau)$ eine mit einer steigenden Gewichtungszeitkonstanten $\tau$ monoton fallende Funktion ist, insbesondere eine Funktion des Kehrwerts der Zeitkonstanten, beispielsweise des Typs $k_m(\tau) = (1-\exp(-(t/\tau))$, wobei t, die Periode zwischen zwei vorläufigen Messwerten ist.

In einer Weiterbildung der Erfindung ist die Betriebs- und Auswerteschaltung dazu eingerichtet, zunächst in Abhängigkeit aktueller, von der Gasbeladung abhängiger Signale einen Zeitkonstantentendenzwert $\tau_s$ zu ermitteln, eine zuletzt gültige Gewichtungszeitkonstante $\tau_{i-1}$ mit dem Zeitkonstantentendenzwert $\tau_s$ zu vergleichen, zur Ermittlung einer aktuellen Gewichtungszeitkonstanten $\tau_i$ den Wert gegenüber der letzten Gewichtungszeitkonstanten $\tau_{i-1}$ zu erhöhen, wenn die zuletzt gültige Gewichtungszeitkonstante $\tau_{i-1}$ kleiner ist als der Zeitkonstantentendenzwert $\tau_s$, und den Wert gegenüber der letzten Gewichtungszeitkonstanten $\tau_{i-1}$ zu verringern, wenn die zuletzt gültige Gewichtungszeitkonstante $\tau_{i-1}$ größer ist als der Zeitkonstantentendenzwert $\tau_s$.

In einer Weiterbildung der Erfindung gilt für den Fall einer zu erhöhenden Gewichtungszeitkonstanten: $(\tau_i - \tau_{i-1})$ / t = a, wobei t, der zeitliche Abstand zweier aufeinanderfolgender Messwerte ist, und a eine Konstante ist, die nicht mehr als 8, insbesondere nicht mehr als 4 und bevorzugt nicht mehr als 2 beträgt.

In einer Weiterbildung der Erfindung gilt für den Fall zu verringernder Zeitkonstanten: $\tau_i / \tau_{i-1}$ = b, mit 0,9 < b < 1, insbesondere 0,95 < b < 1, vorzugsweise 0,975 < b < 1.

In einer Weiterbildung der Erfindung ist die Betriebs und Auswerteschaltung dazu eingerichtet, den Zeitkonstantentendenzwert $\tau_s$ als Funktion der Fluktuation der Eigenfrequenz der Messrohrschwingung normiert mit dem Quadrat der Eigenfrequenz zu ermitteln.

In einer Weiterbildung der Erfindung ist die Betriebs- und Auswerteschaltung dazu eingerichtet, den Zeitkonstantentendenzwert $\tau_s$ zu ermitteln.gemäß:

$$\tau_{s,i} = X \cdot k_\tau \cdot \left(\frac{|f_i - f_{i-1}|}{f_i^2}\right) + (1 - k_\tau) \cdot \tau_{s,i-1} ,$$

oder:

$$\tau_{s,i} = X \cdot \left(\frac{FFD_i}{FD_i^2}\right),$$

wobei:

$$FFD_i = k_{FF} \cdot |f_i - f_{i-1}| + (1 - k_{FF}) \cdot FFD_{i-1} ,$$

und:

$$FD_i = k_F \cdot f_i + (1 - k_F) \cdot FD_{i-1} ,$$

wobei $X$ eine Konstante ist, $f_i$ eine aktuelle Eigenfrequenz einer Messrohrschwingung ist, und $k_\tau$, $k_{FF}$, $k_F$, Gewichtungsfaktoren sind, insbesondere konstante Gewichtungsfaktoren.

Ein aktueller, gefilterter Messwert des Massedurchflusses $\dot{m}_{f,i} = \dot{m}_f(t_i)$ wird gemäß einer Ausgestaltung der Erfindung ermittelt durch eine gewichtete Addition des aktuellen ungefilterten Messwerts des Massedurchflusses $\dot{m}_i = \dot{m}(t_i)$ zum vorherigen gefilterten Messwert des Massedurchflusses $\dot{m}_{f,i-1} = \dot{m}_f(t_{i-1})$, also:

$$\dot{m}_{f,i} := k_m(\tau_i) \cdot \dot{m}_i + (1 - k_m(\tau_i)) \cdot \dot{m}_{f,i-1},$$

wobei die $k_m(\tau_i)$ eine Folge von gasbeladungsabhängigen Gewichtungsfaktoren ist, die in der zuvor beschriebenen Weise ermittelt wurden.

Die Erfindung wird nun anhand eines in den Zeichnungen dargestellten Ausführungsbeispiels näher erläutert.

Es zeigen:

Fig. 1a: eine Darstellung eines Ausführungsbeispiels eines Massedurchflussmessgerätes mit zwei Messrohren in Seitenansicht mit teilweise abgenommenem Gehäuse;

Fig. 1b: das Massedurchflussmessgerätes aus Fig. 1 in perspektivischer Ansicht mit teilweise abgenommenem Gehäuse;

Fig. 2a: Massedurchflussmesswerte in Abhängigkeit von der Gasbeladung im ungefilterten Zustand, mit einem herkömmlichen Filter gefiltert und mit dem adaptiven Filter des erfindungsgemäßen Massedurchflussmessaufnehmers gefiltert;

Fig. 2b: Eine gegenüber Fig. 2a vergrößerte Darstellung von Massedurchflussmesswerten in Abhängigkeit von der Gasbeladung.

Fig. 3: Messwerte eines erfindungsgemäßen Massedurchflussmessgerätes im gefilterten und ungefilterten Zustand.

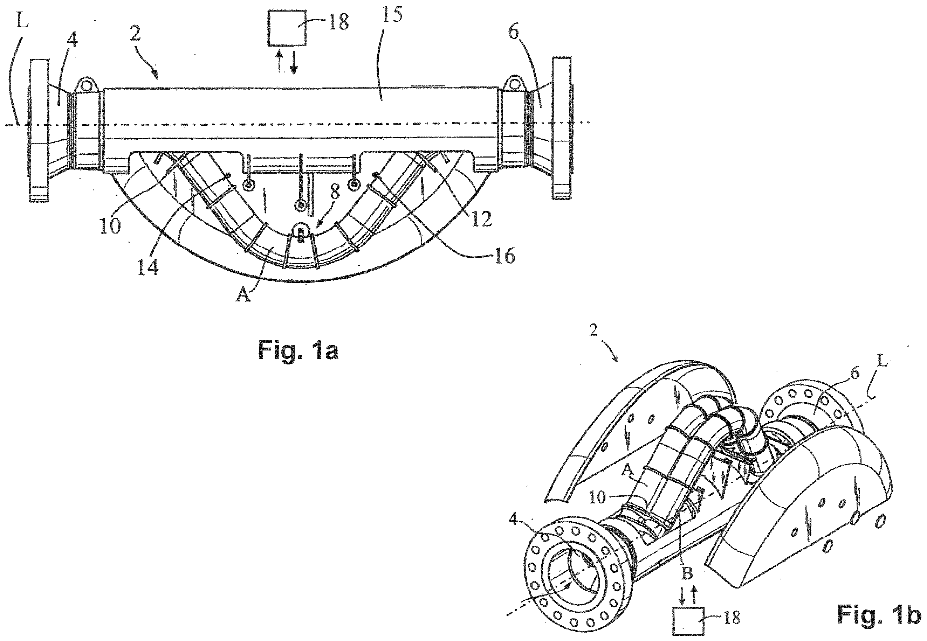

In den Figuren 1a und 1b ist beispielhaft ein nach dem Coriolis-Prinzip arbeitendes Massedurchflussmessgerät 2 mit einer Längsachse L dargestellt, das gemäß der vorliegenden Erfindung ausgebildet ist. Insbesondere ist durch dieses Massedurchflussmessgerät 2 das erfindungsgemäße Verfahren ausführbar. Das Massedurchflussmessgerät 2 weist zwei schwingungsfähig gehaltene Messrohre A und B auf, die jeweils bogenförmig ausgebildet sind und parallel zueinander verlaufen. Das Massedurchflussmessgerät 2 ist dabei derart in eine (nicht dargestellte) Rohrleitung einsetzbar, dass die beiden Messrohre A und B von dem in der Rohrleitung strömenden Fluid durchströmt werden. Eingangsseitig und ausgangsseitig der Messrohre A und B sind jeweils Strömungsteiler bzw. -sammler 4, 6 vorgesehen.

Zwischen den beiden Messrohren A und B ist ein Erreger 8 angeordnet. Der Erreger 8 ist bei der vorliegenden Ausführungsform an einem Umkehrpunkt des Bogens positioniert, der jeweils durch die beiden Messrohre A und B gebildet wird. Durch den Erreger 8 können die beiden Messrohre A und B periodisch gegeneinander ausgelenkt werden, so dass sie Biegeschwingungen ausführen. Die beiden Messrohre A und B sind ferner eingangsseitig und ausgangsseitig durch entsprechende Koppelelemente 10, 12 mechanisch aneinander gekoppelt.

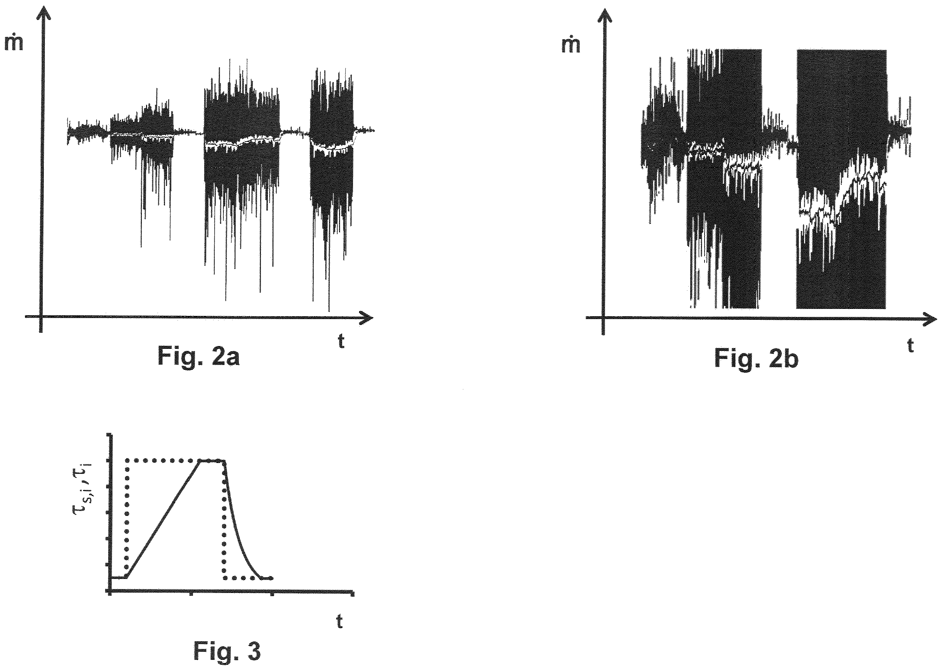

Zwischen den beiden Messrohren A und B, jeweils an einem eingangsseitigen und an einem ausgangsseitigen Abschnitt derselben, erstrecken sich zwei Schwingungssensoren 14, 16. In der vorliegenden Ausführungsform ist durch die beiden Schwingungssensoren 14, 16 jeweils die Abstandsänderung zwischen den beiden Messrohren A, B, d.h. deren kombinierte Amplitude, erfassbar. Die Schwingungssensoren 14, 16 geben in Abhängigkeit von den Schwingungen der Messrohre A und B jeweils eine Sensorspannung aus. Dabei handelt es sich zunächst jeweils um ein analoges Messsignal. Die Anregung des Erregers 8 durch Anlegen einer entsprechenden Anregungsspannung sowie die Bearbeitung und Auswertung der von den Schwingungssensoren 14, 16 bereitgestellten analogen Messsignale erfolgt durch eine entsprechend ausgebildete Betriebs- und Auswerteschaltung 18, die in den Figuren 1 und 2 lediglich schematisch durch eine Box dargestellt ist.

Zur Ermittlung von Messwerten des Massedurchflusses m(t) ist eine Phasendifferenz $\Delta\varphi(t)$ der Schwingungen der beiden Messrohre A, B zwischen den zwei, durch die Schwingungssensoren 14, 16 gebildeten Messpunkten zu bestimmen. Aus dieser Phasendifferenz $\Delta\varphi(t)$ kann insbesondere, wie dem Fachmann bekannt ist, der Massedurchfluss des in der Rohrleitung strömenden Fluids bestimmt werden gemäß:

$$\dot{m}(t) := k \cdot tan(\Delta\varphi(t) / 2) / (2\pi \cdot f),$$

wobei k eine für des jeweilige Messgerät spezifische Konstante ist, und f die aktuelle Schwingungsfrequenz der Messrohre beschreibt.

Zur Bestimmung einer Folge $\Delta\varphi_i = \Delta\varphi(t_i)$ von diskreten Werten der Phasendifferenz $\Delta\varphi(t)$ wird durch die Betriebs- und Auswerteschaltung 18 aus von den Schwingungssensoren 14, 16 bereitgestellten analogen Messsignalen jeweils die Phaseninformation $\varphi_1(t_i)$, $\varphi_2(t_i)$ der Schwingung der beiden Messrohre A, B an den durch die beiden Schwingungssensoren 14, 16 gebildeten Messpunkten bestimmt. Hierzu kann insbesondere das von den Schwingungssensoren 14, 16 jeweils bereitgestellte analoge Messsignal, das in der Regel durch eine den Schwingungen entsprechende Sensorspannung gebildet wird, mit einer hohen Abtastfrequenz, wie beispielsweise mit 40 kHz, abgetastet werden. Dadurch wird ein zeitdiskretes, eindimensionales Messsignal, das eine zeitliche Folge von Messwerten aufweist, erhalten. In der Regel werden die einzelnen Messwerte der Folge auch quantisiert, um eine digitale Verarbeitung zu ermöglichen. Ferner wird jedes Messsignal bei der vorliegenden Ausführunsform in ein analytisches Signal, bestehend aus einem Realteil $R(t_i)$ und einem Imaginärteil $I(t_i)$, gewandelt. Hierzu können beispielsweise in bekannter Weise parallel zwei Filter, die einen Phasenunterschied von 90° aufweisen, eingesetzt werden. Weiterhin ist bei der vorliegenden Ausführungsform vorgesehen, dass die Datenrate des analytischen Signals reduziert wird. Dies kann beispielsweise über entsprechende Dezimationsstufen erfolgen. Aus dem analytischen Signal kann, wie dem Fachmann geläufig ist, jeweils eine (zeitabhängige) Amplitudeninformation $A_1(t_i)$, $A_2(t_i)$ sowie eine (zeitabhängige) Phaseninformation $\varphi_1(t_i)$, $\varphi_2(t_i)$ der Schwingung der beiden Messrohre A, B an dem jeweiligen Messpunkt erhalten werden. Die Phasendifferenz $\Delta\varphi_i = \Delta\varphi(t_i)$ zwischen den beiden, durch die Schwingungssensoren 14, 16 gebildeten Messpunkten kann durch Bilden der Differenz der Phaseninformationen $\varphi_1(t_i)$, $\varphi_2(t_i)$ der von den beiden Schwingungssensoren 14, 16 erfassten Schwingungen erhalten werden. Da bei der vorliegenden Ausführungsform die Signalverarbeitung weitgehend digital erfolgt, sind die jeweiligen verarbeiteten Messsignale zeitdiskret, so dass jeweils auf konkrete Zeitpunkte $t_i$ Bezug genommen wird.

Durch die Betriebs- und Auswerteschaltung werden in der Regel die Amplitudeninformation $A_1(t_i)$, $A_2(t_i)$ sowie die Phaseninformation $\varphi_1(t_i)$, $\varphi_2(t_i)$ ausgewertet. Insbesondere wird in Abhängigkeit von diesen Größen jeweils die Anregung der Messrohre A, B durch den Erreger 8 gesteuert.

Die Betriebs- und Auswerteschaltung ist weiterhin dazu eingerichtet, aus der Folge von zeitdiskreten Phasendifferenzwerten $\Delta\varphi_i$ wird eine entsprechende Folge von Messwerten des Massedurchflusses $\dot{m}_i$ durch die Rohrleitung $\dot{m}_i$ zu bestimmen gemäß:

$$\dot{m}_i := k \cdot \tan(\Delta\varphi_i / 2) / (2\pi \cdot f_i),$$

wobei

$$\dot{m}_i := m(t_i), \Delta\varphi_i = \Delta\varphi(t_i), \text{ und } f_i = f(t_i).$$

Es können noch weitere oder zu den oben erläuterten Signalverarbeitungen alternative digitale oder analoge Signalverarbeitungen, wie beispielsweise eine Verstärkung, eine Nullpunkt-Kompensation, etc., durchgeführt werden, um die Folge von Messwerten des Massedurchflusses $\dot{m}_i$ bereitzustellen. Dies kann sowohl vor als auch nach der im folgenden beschriebenen Signalverarbeitung mit einem adaptiven Filter geschehen.

Die die Folge von Messwerten des Massedurchflusses $\dot{m}_i$, oder kurz Messwerten ist insbesondere bei schwankenden Gasbeladungen eines in der Rohrleitung strömenden Messmediums unterschiedlich starken Fluktuationen unterworfen, wie in Fign. 2a und 2b dargestellt ist, wobei Fig. 2b einen Ausschnitt mit größerer Auflösung zeigt. Die Figuren zeigen zunächst ungefilterte Massedurchflussmesswerte. Je nach Gasbeladung fluktuieren die Messwerte so stark, dass ein konkreter Messwert kaum noch zu benennen ist. Das schmalere, helle Band in der Mitte zeigt den zugehörigen Messwertverlauf auf Basis einer herkömmlichen Tiefpassfilterung der Messwerte. Hier wird insbesondere anhand des Ausschnitts in Fig. 2b deutlich, dass auch diese gefilterten Daten noch erhebliche Fluktuationen aufweisen. Die innerhalb des hellen Bandes verlaufende dunkle Linie zeigt das Resultat der Messwertverarbeitung mittels des adaptiven Filters des erfindungsgemäßen Massedurchflussmessgerätes. Es wird ersichtlich, dass das Signal deutlich geringere Fluktuationen aufweist, und dennoch dem tatsächlichen Messwertverlauf zumindest so gut folgen kann, wie das mit einem konstanten Filter prozessierte Signal.

Die effektive Arbeitsweise des adaptiven Filters wird durch Steuern eines Filterparameters in Abhängigkeit von Größen, die vom Phasendifferenz-Messsignal unabhängig sind, ermöglicht, wie im Folgenden näher erläutert wird.

Zum Betrieb benötigt der adaptive Filter eine aktuelle Zeitkonstante $\tau_i := \tau(t_i)$, die im vorliegenden Ausführungsbeispiel in Abhängigkeit von der Fluktuation der Schwingungsfrequenz der Messrohrschwingungen ermittelt wird. Wobei die Fluktuation ihrerseits auch über einen Filter erfasst wird, um zu starke Veränderungen der Zeitkonstante zu vermeiden.

Hierbei wird zunächst ein aktueller Zeitkonstantentendenzwert $\tau_{s,i}$ ermittelt, mit dem eine zuletzt gültige Zeitkonstante verglichen wird. Ist der Zeitkonstantentendenzwert um mehr als einen Toleranzwert größer als die zuletzt gültige Zeitkonstante $\tau_{i-1}$, wird eine aktuell gültige Zeitkonstante $\tau_i$ mit einem größeren Wert als dem der zuletzt gültigen ermittelt. Ist der Zeitkonstantentendenzwert kleiner als die zuletzt gültige Zeitkonstante $\tau_{i-1}$, wird eine aktuell gültige Zeitkonstante $\tau_i$ mit einem kleineren Wert als dem der zuletzt gültigen ermittelt.

Der aktuelle Zeitkonstantentendenzwert $\tau_{s,i}$ wird in diesem Ausführungsbeispiel anhand der Fluktuation der Frequenz der Messrohrschwingungen ermittelt, die mit dem Quadrat dieser Frequenz normiert wird. Im Einzelnen verwendet der Filter die folgende Gleichung:

$$\tau_{s,i} = k_{\tau s} \cdot X \cdot \left(\frac{|f_i - f_{i-1}|}{f_i{}^2}\right) + (1 - k_{\tau s}) \cdot \tau_{s,i-1}$$

Der Gewichtungsfaktor $k_{\tau s}$, mit dem eine aktuelle Frequenzfluktuation in den aktuellen Zeitkonstantentendenzwert eingeht, beträgt einige wenige % und kann ermittelt werden als:

$$k_{\tau s} = (1 - \exp(-t_s/\tau_k)),$$

wobei $t_s$ das Messintervall, also die Zeit zwischen zwei Frequenzmesswerten ist, beispielsweise 20 ms. $\tau_k$ ist eine festgelegte Zeitkonstante die ein Vielfaches von $t_s$ beträgt, beispielsweise $0{,}5\,s < \tau_k < 2\,s$, insbesondere $\tau_k = 1\,s$.

Der Faktor X ist eine Konstante mit einem Wert zwischen 10 und 200, beispielsweise 50.

Wenn der so ermittelten Zeitkonstantentendenzwert $\tau_{s,i}$ größer ist als die Summe aus der zuletzt gültigen Gewichtungszeitkonstanten $\tau_{i-1}$ und einem Toleranzwert, der beispielsweise einem halben Messintervall $t_s$ entspricht, wird die Gewichtungszeitkonstante erhöht, beispielsweise durch Addition eines konstanten Zeitinkrements, welches einem Messintervall $t_s$ entspricht, beispielsweise 20 ms.

Wenn dagegen der Zeitkonstantentendenzwert $\tau_{s,i}$ kleiner ist als die zuletzt gültige Gewichtungszeitkonstante $\tau_{i-1}$ wird letztere mit einem Faktor $b < 1$ multipliziert, um eine aktuelle Gewichtungszeitkonstante $\tau_i$ zu ermitteln, also $\tau_i = b \cdot \tau_{i-1}$, wobei gilt: $0{,}9 < b < 1$, insbesondere $0{,}95 < b < 1$, vorzugsweise $0{,}975 < b < 1$.

Die Kombination von Erhöhungen der Gewichtungszeitkonstanten durch Addition eines moderaten Inkrements mit einer Verringerung durch Multiplikation mit einem Faktor $< 1$ bewirkt einereits, dass die Gewichtungszeitkonstante ausgehend von kleinen Werten bei auftretenden Gasbeladungen verhältnismäßig schnell anwächst aber dann, anders als bei einer Folge von Multiplikationen, eben nicht exponentiell ins Uferlose steigt, und dass andererseits bei Abnahme der Gasbeladung die Gewichtungszeitkonstante exponentiell abnimmt, so dass die Messwertermittlung zügig an die günstigeren Bedingungen angepasst werden kann. Ein Beispiel einer Sprungantwort der Gewichtungszeitkonstanten auf einen Sprung des Zeitkonstantentendenzwerts ist in Fig. 3 dargestellt. Hierin zeigt die punktierte Linie einen Sprung des Zeitkonstantentendenzwerts $\tau_{s,i}$ von beispielsweise 1 s auf 10 s und zurück, während die durchgezogene Linie die Reaktion der Gewichtungszeitkonstanten $\tau_i$ darstellt.

Die Gewichtungszeitkonstante $\tau_i$ geht in die Ermittlung eines Gewichtungsfaktors $k_m(\tau_i)$ zur Ermittlung eines gefilterten Messwerts ein gemäß:

$k_m(\tau_i) = (1 - \exp(-(t_s/\tau_i))$, wobei $t_s$ wiederum das Messintervall ist. Ein aktueller, gefilterter Messwert $\dot{m}_{f,i} = \dot{m}_f(t_i)$ wird ermittelt durch eine gewichtete Addition des aktuell ungefilterten Messsignals $\dot{m}_i = \dot{m}(t_i)$ zum vorherigen gefilterten Messsignal $\dot{m}_{f,i-1} = \dot{m}_f(t_{i-1})$, also:

$$\dot{m}_{f,i} = k_m(\tau_i) \cdot \dot{m}_i + (1 - k_m(\tau_i)) \, \dot{m}_{f,i-1}.$$

Wie in Fign. 2a und 2b dargestellt führt dies zu einer signifikanten verbesserten Dämpfung der Fluktuationen der Massedurchflussmesswerte.

Wenn die Frequenzfluktuationen zur Ermittlung des Zeitkonstantentendenzwerts herangezogen werden, dann gehen aktuelle Frequenzfluktuationen und deren normierender Frequenzwert, wie oben beschrieben, mit einem Gewichtungsfaktor $k_{\tau s}$ in den Zeitkonstantentendezwert ein, der die Funktion einer Zeitkonstanten ist.

Da die relativen Fluktuationen der Fluktuationen der Frequenz deutlich größer sind als die relativen Fluktuationen der Frequenz, kann es sinnvoll sein, für die Fluktuationen eine größere Zeitkonstante zu verwenden als für die normierende Frequenz. Wie in der folgenden Ausgestaltung dargestellt ist.

$$\tau_{s,i} = X \cdot \left( \frac{FFD_i}{FD_i{}^2} \right),$$

wobei:

$$FFD_i = k_{FF} \cdot |f_i - f_{i-1}| + (1 - k_{FF}) \cdot FFD_{i-1} \, ,$$

und:

$$FD_i = k_F \cdot f_i + (1 - k_F) \cdot FD_{i-1} \, ,$$

wobei $X$ eine Konstante ist, $f_i$ eine aktuelle Eigenfrequenz einer Messrohrschwingung ist, und $k_{FF}$, $k_F$, Gewichtungsfaktoren sind, insbesondere konstante Gewichtungsfaktoren, wobei gilt:

$$k_{FF,} < k_F.$$

Damit ist gewährleistet, dass eine schnellere Anpassung des adaptiven Filters an eine sich tatsächlich ändernde Schwingungsfrequenz der Messrohre erfolgt.

Anstelle der Fluktuationen der Schwingungsfrequenz der Messrohre kann auch die Dämpfung der Schwingungsamplituden $A_1(t_i)$, $A_2(t_i)$ bei der aktuellen Resonanzfrequenz bzw. die Fluktuation dieser Dämpfung herangezogen werden. Die Dämpfung $D_i = D(t_i)$ ergibt sich beispielsweise aus einem Verhältnis eines aktuellen Erregersignals $E_i = E(t_i)$, zum Anregen der Schwingungen und beispielsweise der Summe der Amplituden bei Resonanz, also:

$$D_i = E_i / (A_1(t_i) + A_2(t_i))$$

Eine normierte aktuelle Fluktuation der $FD_i$ Dämpfung kann ermittelt werden gemäß:

$$FD_i = (D_i - D_{i-1})/D_{i-1}$$

Auf Basis dieser Größen ist mit passenden Normierungen entsprechend zu den im Zusammenhang mit der Frequenzfluktuation beschriebenen Verfahren ein Zeitkonstantentendenzwert bestimmbar, mit dem der Filter wie oben beschrieben zu steuern ist.

**Patentansprüche**

1.  Messaufnehmer (2) zum Bestimmen des Massedurchflusses einer Flüssigkeit, umfassend:

   mindestens ein Messrohr (A, B) zum Führen der Flüssigkeit wobei das Messrohr (A, B) einen einlassseitigen Endabschnitt (10) und einen auslassseitigen Endabschnitt (12) aufweist;
   mindestens einen Trägerkörper (15), an dem das Messrohr im Bereich des einlassseitigen Endabschnitts und im Bereich des auslassseitigen Endabschnitts befestigt ist;
   mindestens einen Erreger (8) zum Anregen von Schwingungen des mindestens einen Messrohrs (A, B) in mindestens einer Schwingungsmode;
   mindestens zwei Schwingungssensoren (14, 16) zum Erfassen von Schwingungen des Messrohrs und zum Ausgeben von schwingungsabhängigen Signalen;
   eine Betriebs- und Auswerteschaltung (18) zum Treiben des mindestens einen Erregers (8), zum Empfangen der schwingungsabhängigen Signale der Schwingungssensoren (14, 16), und zum Ermitteln einer Folge von einen jeweiligen Massedurchfluss repräsentierenden Messwerten in Abhängigkeit von zumindest einer Folge von jeweils eine Phasendifferenz zwischen den schwingungsabhängigen Signalen der Schwingungssensoren präsentierenden, zeitdiskreten Messsignalen,
   wobei die Betriebs- und Auswerteschaltung (18) einen adaptiven Tiefpassfilter umfasst, zum Filtern der Folge der den Massedurchfluss repräsentierenden Messwerte; wobei der Tiefpassfilter mindestens einen Filterparameter aufweist, der von mindestens einer adaptiven Steuergröße abhängt,
   **dadurch gekennzeichnet, dass**
   die adaptive Steuergröße
   ihrerseits von der Gasbeladung des Messmediums abhängig ist, und dass die Betriebs- und Auswerteschaltung dazu eingerichtet ist, die Steuergröße in Abhängigkeit einer gasbeladungsabhängigen Fluktuation einer Eigenfrequenz der Messrohrschwingung zu ermitteln.

2. Messaufnehmer nach Anspruch 1, wobei die Steuergröße unabhängig vom den Massedurchfluss ist.

3. Messaufnehmer nach Anspruch 1 oder 2, wobei die Steuergröße von einem Signal abhängt, welches das Ausmaß der Gasbeladung repräsentiert.

4. Messaufnehmer nach einem der vorhergehenden Ansprüche, wobei die Steuergröße eine Gewichtungsfunktion aufweist, mit welcher ein aktueller, vorläufiger Messwert zu einem auszugebenden Messwert beiträgt, wobei die Gewichtungsfunktion von einer aktuellen Gewichtungszeitkonstanten abhängt, die in Abhängigkeit von der Gasbeladung ermittelt wird, wobei die Gewichtungsfunktion eine mit einer steigenden Gewichtungszeitkonstanten $\tau$ monoton fallende Funktion ist, insbesondere eine Funktion des Kehrwerts der Zeitkonstanten, beispielsweise des Typs $(1-\exp(-(t/\tau))$, wobei t, die Periode zwischen zwei vorläufigen Messwerten ist.

5. Messaufnehmer nach Anspruch 4, wobei die Betriebs- und Auswerteschaltung dazu eingerichtet ist, zunächst in Abhängigkeit aktueller von der Gasbeladung abhängiger Signale einen Zeitkonstantentendenzwert $\tau_s$ zu ermitteln, eine zuletzt gültige Gewichtungszeitkonstante $\tau_{i-1}$ mit dem Zeitkonstantentendenzwert $\tau_s$ zu vergleichen, zur Ermittlung einer aktuellen Gewichtungszeitkonstanten $\tau_i$ den Wert gegenüber der letzten Gewichtungszeitkonstanten $\tau_{i-1}$ zu erhöhen, wenn die zuletzt gültige Gewichtungszeitkonstante $\tau_{i-1}$ kleiner ist als der Zeitkonstantentendenzwert $\tau_s$, und den Wert gegenüber der letzten Gewichtungszeitkonstanten $\tau_{i-1}$ zu verringern, wenn die zuletzt gültige Gewichtungszeitkonstante $\tau_{i-1}$ größer ist als der Zeitkonstantentendenzwert $\tau_s$.

6. Messaufnehmer nach Anspruch 5, wobei für den Fall einer zu erhöhenden Gewichtungszeitkonstanten gilt: $(\tau_i - \tau_{i-1})$ / t = a, wobei t, der zeitliche Abstand zweier aufeinanderfolgender Messwerte ist, und a eine Konstante ist, die nicht mehr als 8, insbesondere nicht mehr als 4 und bevorzugt nicht mehr als 2 beträgt.

7. Messaufnehmer nach Anspruch 6, wobei für den Fall zu verringernder Zeitkonstanten gilt: $\tau_i / \tau_{i-1} = b$, mit $0,9 < b < 1$, insbesondere $0,95 < b < 1$, vorzugsweise $0,975 < b < 1$.

8. Messaufnehmer nach einem der Ansprüche 5 bis 7, wobei die Betriebs- und Auswerteschaltung dazu eingerichtet ist, den Zeitkonstantentendenzwert $\tau_s$ als Funktion der Fluktuation der Eigenfrequenz der Messrohrschwingung normiert mit dem Quadrat der Eigenfrequenz zu ermitteln.

9. Messaufnehmer nach Anspruch 8, wobei die Betriebs und Auswerteschaltung dazu eingerichtet ist, den Zeitkonstantentendenzwert $\tau_s$ zu ermitteln.gemäß:

$$\tau_{s,i} = X \cdot k_\tau \cdot \left(\frac{|f_i - f_{i-1}|}{f_i{}^2}\right) + (1 - k_\tau) \cdot \tau_{s,i-1} \, ,$$

oder:

$$\tau_{s,i} = X \cdot \left(\frac{FFD_i}{FD_i{}^2}\right),$$

wobei:

$$FFD_i = k_{FF} \cdot |f_i - f_{i-1}| + (1 - k_{FF}) \cdot FFD_{i-1} \, ,$$

und:

$$FD_i = k_F \cdot f_i + (1 - k_F) \cdot FD_{i-1} \, ,$$

wobei X eine Konstante ist, $f_i$ eine aktuelle Eigenfrequenz einer Messrohrschwingung ist, und $k_\tau$, $k_{FF}$, $k_F$, Gewichtungsfaktoren sind, insbesondere konstante Gewichtungsfaktoren.

**Claims**

1. Sensor (2) designed to determine the mass flow of a liquid, said sensor comprising:

   at least a measuring tube (A, B) designed to conduct the liquid, wherein the measuring tube (A, B) has an end section on the inlet side (10) and an end section on the outlet side (12);
   at least a carrier body (15) on which the measuring tube is fixed in the area of the end section on the inlet side and in the area of the end section on the outlet side;
   at least an exciter (8) designed to excite vibrations of the at least one measuring tube (A, B) in at least one vibration mode;
   at least two vibration sensors (14, 16) designed to measure vibrations of the measuring tube and to output signals that depend on the vibrations;
   an operation and evaluation circuit (18) designed to drive the at least one exciter (8), to receive the vibration-dependent signals of the vibration sensors (14, 16) and to determine a sequence of measured values representing a mass flow as a function of at least a sequence of time-discrete measuring signals, each presenting a phase difference between the vibration-dependent signals of the vibration sensors,
   wherein the operation and evaluation circuit (18) comprises an adaptive low-pass filter designed to filter the sequence of the measured values representing the mass flow; wherein the low-pass filter has at least a filter parameter that depends on at least an adaptive control variable,
   **characterized in that**
   the adaptive control variable depends, in turn, on the gas load of the medium being measured,
   and **in that** the operation and evaluation circuit is designed to determine the control variable as a function of a fluctuation of a natural frequency of the measuring tube vibration, said fluctuation being dependent on the gas load.

2. Sensor as claimed in Claim 1, wherein the control variable is independent of the mass flow.

3. Sensor as claimed in Claim 1 or 2, wherein the control variable depends on a signal which represents the extent of the gas load.

4. Sensor as claimed in one of the previous claims, wherein the control variable has a weighting function with which a current, preliminary measured value contributes to a measured value to be output, wherein the weighting function depends on a current weighting time constant, which is determined depending on the gas load, wherein the weighting function is a function that falls monotonically with an increasing weighting time constant $\tau$, particularly a function of the inverse value of the time constant, for example of the type $(1-\exp(-(t/\tau))$, wherein t is the period between two provisional measured values.

5. Sensor as claimed in Claim 4, wherein the operation and evaluation circuit is designed to determine a time constant tendency value $\tau_s$, initially as a function of current signals that depend on the gas load, to compare a weighting time constant $\tau_{i-1}$, which was last valid, with the time constant tendency value $\tau_s$, to determine a current weighting time constant $\tau_i$ to increase the value in relation to the last weighting time constant $\tau_{i-1}$ if the last valid weighting time constant $\tau_{i-1}$ is less than the time constant tendency value $\tau_s$, and to reduce the value in relation to the last weighting time constant $\tau_{i-1}$ if the last valid weighting time constant $\tau_{i-1}$ is greater than the time constant tendency value $\tau_s$.

6. Sensor as claimed in Claim 5, wherein the following applies in the event of a weighting time constant to be increased: $(\tau_i - \tau_{i-1}) / t = a$, wherein t is the time interval between two consecutive measured values, and 'a' is a constant that is not greater than 8, particularly not greater than 4 and preferably not greater than 2.

7. Sensor as claimed in Claim 6, wherein the following applies in the event of a time constant to be reduced: $\tau_i / \tau_{i-1} = b$, with $0.9 < b < 1$, particularly $0.95 < b < 1$, preferably $0.975 < b < 1$.

8. Sensor as claimed in one of the Claims 5 to 7, wherein the operation and evaluation circuit is configured to determine the time constant tendency value $\tau_s$ as a function of the fluctuation of the natural frequency of the measuring tube vibration normalized with the square of the natural frequency.

9. Sensor as claimed in Claim 8, wherein the operation and evaluation circuit is designed to determine the time constant tendency value $\tau_s$ according to the following formula:

$$\tau_{s,i} = X \cdot k_\tau \cdot \left( \frac{|f_i - f_{i-1}|}{f_i^2} \right) + (1 - k_\tau) \cdot \tau_{s,i-1} ,$$

or:

$$\tau_{s,i} = X \cdot \left( \frac{FFD_i}{FD_i^2} \right) ,$$

wherein:

$$FFD_i = k_{FF} \cdot |f_i - f_{i-1}| + (1 - k_{FF}) \cdot FFD_{i-1} ,$$

and:

$$FD_i = k_F \cdot f_i + (1 - k_F) \cdot FD_{i-1} ,$$

wherein X is a constant, $f_i$ is a current natural frequency of a measuring tube vibration, and $k_\tau$, $k_{FF}$, $k_F$, are weighting factors, particularly constant weighting factors.

## Revendications

1. Capteur (2) destiné à la détermination du débit massique d'un liquide, lequel capteur comprend :

   au moins un tube de mesure (A, B) destiné au guidage du liquide, le tube de mesure (A, B) présentant une section d'extrémité côté entrée (10) et une section d'extrémité côté sortie (12) ;
   au moins un corps de support (1 5) auquel le tube de mesure est fixé dans la zone de la section d'extrémité côté entrée et dans la zone de la section d'extrémité côté sortie ;
   au moins un excitateur (8) destiné à l'excitation des vibrations de l'au moins un tube de mesure (A, B) dans au moins un mode de vibration ;
   au moins deux capteurs de vibrations (14, 16) destinés à mesurer les vibrations du tube de mesure et à émettre des signaux dépendant des vibrations ;
   un circuit de commande et d'exploitation (18) destiné à commander l'au moins un excitateur (8), à recevoir les signaux des capteurs de vibrations (14, 16) dépendant des vibrations et à déterminer une séquence de valeurs mesurées représentant un débit massique respectif en fonction d'au moins une séquence de signaux de mesure respectifs à temps discret présentant une différence de phase entre les signaux des capteurs de vibrations dépendant des vibrations,
   le circuit de commande et d'exploitation (18) comprenant un filtre passe-bas adaptatif destiné à filtrer la séquence de valeurs mesurées représentant le débit massique ; le filtre passe-bas présentant au moins un paramètre de filtre dépendant d'au moins une grandeur de commande adaptative,
   **caractérisé**
   **en ce que** la grandeur de commande adaptative dépend à son tour de la charge en gaz du produit mesuré, et **en ce que** le circuit de commande et d'exploitation est conçu pour déterminer la grandeur de commande en fonction d'une fluctuation, dépendant de la charge en gaz, d'une fréquence naturelle de la vibration du tube de mesure.

2. Capteur selon la revendication 1, pour lequel la grandeur de commande est indépendante du débit massique.

3. Capteur selon la revendication 1 ou 2, pour lequel la grandeur de commande dépend d'un signal qui représente l'étendue de la charge en gaz.

4. Capteur selon l'une des revendications précédentes, pour lequel la grandeur de commande présente une fonction de pondération avec laquelle une valeur mesurée actuelle, provisoire, contribue à une valeur mesurée à délivrer, la fonction de pondération dépendant d'une constante de temps de pondération actuelle, qui est déterminée en fonction de la charge en gaz, la fonction de pondération étant une fonction qui diminue de manière monotone avec une constante de temps de pondération $\tau$ croissante, notamment une fonction de l'inverse de la constante de temps, par exemple du type (1-exp(-(t/$\tau$)), t étant la période entre deux valeurs mesurées provisoires.

5.  Capteur selon la revendication 4, pour lequel le circuit de commande et d'exploitation est conçu pour déterminer, dans un premier temps, une valeur de tendance de constante de temps $\tau_s$ en fonction des signaux dépendant de la charge en gaz, pour comparer une dernière constante de temps de pondération $\tau_{i-1}$ valide avec la valeur de tendance de constante de temps $\tau_s$, pour déterminer une constante de temps de pondération $\tau_i$ actuelle en augmentant la valeur par rapport à la dernière constante de temps de pondération $\tau_{i-1}$ si la dernière constante de temps de pondération $\tau_{i-1}$ valide est inférieure à la valeur de tendance de constante de temps $\tau_s$, et en réduisant la valeur par rapport à la dernière constante de temps de pondération $\tau_{i-1}$ si la dernière constante de temps de pondération $\tau_{i-1}$ valide est supérieure à la valeur de tendance de constante de temps $\tau_s$.

6.  Capteur selon la revendication 5, pour lequel, dans le cas d'une constante de temps de pondération à augmenter, on applique la formule suivante : $(\tau_i - \tau_{i-1}) / t = a$, t étant l'intervalle de temps entre deux valeurs de mesure successives, et 'a' une constante qui n'est pas supérieure à 8, notamment pas supérieure à 4 et de préférence pas supérieure à 2.

7.  Capteur selon la revendication 6, pour lequel, dans le cas de constantes de temps à réduire, on applique la formule suivante : $\tau_i / \tau_{i-1} = b$, avec $0,9 < b < 1$, notamment $0,95 < b < 1$, de préférence $0,975 < b < 1$.

8.  Capteur selon l'une des revendications 5 à 7, pour lequel le circuit de commande et d'exploitation est configuré pour déterminer la valeur de tendance de constante de temps en fonction de la fluctuation de la fréquence naturelle de la vibration du tube de mesure normalisée par le carré de la fréquence naturelle.

9.  Capteur selon la revendication 8, pour lequel le circuit de commande et d'exploitation est conçu pour déterminer la valeur de tendance de constante de temps $\tau_s$ conformément à la formule suivante :

$$\tau_{s,i} = X \cdot k_\tau \cdot \left(\frac{|f_i - f_{i-1}|}{f_i^2}\right) + (1 - k_\tau) \cdot \tau_{s,i-1} ,$$

ou :

$$\tau_{s,i} = X \cdot \left(\frac{FFD_i}{FD_i^2}\right) ,$$

avec :

$$FFD_i = k_{FF} \cdot |f_i - f_{i-1}| + (1 - k_{FF}) \cdot FFD_{i-1} ,$$

et :

$$FD_i = k_F \cdot f_i + (1 - k_F) \cdot FD_{i-1} ,$$

X étant une constante, $f_i$ étant une fréquence naturelle actuelle d'une vibration du tube de mesure, et $k_\tau$, $k_{FF}$, $k_F$, étant des facteurs de pondération, notamment des facteurs de pondération constants.

Fig. 1a

Fig. 1b

Fig. 2b

Fig. 2a

Fig. 3

**IN DER BESCHREIBUNG AUFGEFÜHRTE DOKUMENTE**

**In der Beschreibung aufgeführte Patentdokumente**

- DE 102010003948 A1
- WO 2007035376 A2